# EUROPÄISCHE PATENTSCHRIFT

(11) **EP 3 017 176 B1**
(45) Veröffentlichungstag und Bekanntmachung des Hinweises auf die Patenterteilung: **10.04.2019**
(21) Anmeldenummer: 14734098.8
(22) Anmeldetag: 25.06.2014
(51) Int. Cl.: F02M 26/00, F02D 41/02, F01N 3/023

(54) **VERFAHREN ZUR REGENERATION EINES MIT FESTSTOFFEN VERUNREINIGTEN FILTERELEMENTS EINER ABGASANLAGE UND ABGASANLAGE**
METHOD FOR REGENERATING A CLOGGED FILTER ELEMENT OF AN EXHAUST SYSTEM AND EXHAUST SYSTEM
PROCÉDÉ DE RÉGÉNÉRATION D'UN ÉLÉMENT FILTRANT BOUCHÉ D'UN SYSTÈME D'ÉCHAPPEMENT ET SYSTÈME D'ÉCHAPPEMENT

(30) Priorität: 28.06.2013 DE 102013212733
(43) Veröffentlichungstag der Anmeldung: 11.05.2016
(73) Patentinhaber: Volkswagen AG, 38440 Wolfsburg (DE)
(72) Erfinder: HEILKENBRINKER, Claus, 38162 Cremlingen (DE)
(74) Vertreter: Gulde & Partner
(86) Internationale Anmeldenummer: PCT/EP2014/063355
(87) Internationale Veröffentlichungsnummer: WO 2014/207023

(56) Entgegenhaltungen:
- WO-A1-2011/010029
- DE-A1-102006 054 043
- DE-A1-102009 014 277
- DE-A1-102009 058 698
- DE-A1-102013 000 247

## Beschreibung

Die Erfindung betrifft ein Verfahren zur Regeneration eines mit Feststoffen verunreinigten Filterelements einer Abgasanlage, wobei die Abgasanlage einen Hauptabgaspfad mit einem Partikelfilter und einen AGR-Pfad aufweist, welcher stromab des Partikelfilters vom Hauptabgaspfad abzweigt, wobei das Filterelement im AGR-Pfad angeordnet ist. Zudem betrifft die Erfindung eine Abgasanlage, welche zur Durchführung des erfindungsgemäßen Verfahrens ausgebildet ist.

Zur Emissionsverminderung von Verbrennungskraftmaschinen und zur Einhaltung aktueller Abgasgesetzgebungen kommen Systeme zur Abgasrückführung (AGR; englisch EGR: Exhaust Gas Recirculation) zum Einsatz. Diese AGR-Systeme können beispielsweise als Hochdruck-Abgasrückführung ausgeführt sein. Dabei wird ein rückgeführter Abgasstrom stromauf einer Turbine eines Turboladers einem Hauptabgasstrom entnommen und stromab eines Verdichters des Turboladers einer Ansaugluft der Verbrennungskraftmaschine zugeführt. Ein AGR-System kann jedoch auch als Niederdruck-Abgasrückführung ausgebildet sein, wobei der rückgeführte Abgasstrom stromab der Turbine entnommen und stromauf des Verdichters zugeführt wird. Zur Zudosierung eines rückgeführten Abgasstroms zu einer Ansaugluft der Verbrennungskraftmaschine dient ein AGR-Ventil im AGR-System.

Aus DE 103 47 834 A1 ist eine Abgasanlage eines Dieselmotors mit einem Partikelfilter und einer stromauf des Partikelfilters abzweigenden Hochdruck-Abgasrückführung bekannt. Die AGR-Leitung beherbergt einen AGR-Kühler sowie eine diesen umgehende Bypassleitung. Die Temperatur des rückgeführten Abgases wird über den in der Bypassleitung geführten Abgasmassenstrom in Abhängigkeit des Betriebspunkts des Dieselmotors geregelt. Um eine schnelle Regeneration des Partikelfilters zu erzielen, erfolgt keine Kühlung des rückgeführten Abgases.

Die US 6,625,978 B1 offenbart eine Niederdruck-Abgasrückführung. Ein Anfangsabschnitt eines AGR-Kanals, in welchem sich ein Partikelfilter befindet, ist in einem Katalysator, welcher zur Reinigung eines Hauptabgasstroms dient, eingebettet. Eine Abwärme des Katalysators wird mittels Wärmeleitung über den Anfangsabschnitt des AGR-Kanals in den Partikelfilter eingeleitet, wodurch zusammen mit einer elektrischen Beheizung eine Regeneration des Partikelfilters bewirkt wird. Das durch den Partikelfilter strömende Abgas strömt nach dem Partikelfilter durch einen AGR-Kühler und ein AGR-Ventil.

Auch die WO 2011/018134 A1 offenbart ein Abgassystem mit einer Niederdruck-Abgasrückführung. In einem Hauptabgasstrang sind in Abgasströmungsrichtung ein Katalysator, ein Partikelfilter und ein weiteres Filterelement (z. B. ein Sieb oder ein Drahtgestrick) angeordnet. Das weitere Filterelement kann unmittelbar stromab des Partikelfilters angeordnet sein, wodurch ein Abbrand des zumindest einen weiteren Filterelements im Rahmen einer regelmäßigen Regeneration des Partikelfilters reinigbar ist.

Die DE 10 2008 015 600 A1 offenbart ein Verfahren zum Betreiben einer Brennkraftmaschine, mit einer Niederdruck-Abgasrückführung stromab eines Dieselpartikelfilters. Während einer Regeneration des Partikelfilters wird ein Niederdruck AGR-Ventil wenigstens teilweise geöffnet. Durch die Abgasrückführung während der Regeneration des Partikelfilters wird eine reduzierte Schadstoffemission und ein verbessertes Abbrandverhalten im Partikelfilter durch eine Erhöhung des Volumenstroms durch den Partikelfilter erreicht.

Die DE 10 2006 038 706 A1 offenbart eine Brennkraftmaschine mit einer Niederdruck-Abgasrückführung stromab eines ersten Partikelfilters, welcher in einem Hauptabgaspfad angeordnet ist. Die Niederdruck-Abgasrückführung weist einen zweiten Partikelfilter, z. B. ein Drahtgeflecht oder Sieb auf, welcher eine Filtermaschenweite von größer oder gleich 50 Mikrometern aufweist, sodass Partikel mit einem Durchmesser kleiner als die Filtermaschenweite passieren können und Partikel mit einem Durchmesser größer oder gleich der Filtermaschenweite zurückgehalten werden. Dadurch werden Bauteile stromab des zweiten Partikelfilters ausreichend vor Beschädigungen durch auftreffende Partikel, die sich beispielsweise aus dem ersten Partikelfilter ablösen können, geschützt. Zudem ist sichergestellt, dass sich der zweite Partikelfilter nicht zusetzt. Die Partikel aus dem ersten Partikelfilter (ein Dieselpartikelfilter), welche sich im Betrieb lösen können, stammen teilweise aus einem Fertigungsprozess (Schweißperlen, Schmutz) oder teilweise aus einem Monolithen des ersten Partikelfilters.

Das Abgassystem kann somit ein Filterelement umfassen, welches dazu dient, Feststoffe aus einem rückgeführten Abgas herauszufiltern, um Bauteile innerhalb des AGR-Systems oder in einem Ansaugtrakt der Verbrennungskraftmaschine vor Beschädigungen zu schützen. Dieses Filterelement kann sich im Betrieb mit Partikeln zusetzen und die Abgasrückführung verschlechtern oder sogar verhindern. Dies kann dazu führen, dass ein vorgeschriebenes Emissionsverhalten nicht mehr eingehalten wird und/oder sich der Kraftstoffverbrauch der Verbrennungskraftmaschine erhöht. Dadurch kann ein Tausch des Filterelements oder sogar der gesamten Abgasrückführungsstrecke notwendig werden.

WO 2011/010029 A1 offenbart eine Abgasnachbehandlungsvorrichtung mit einem Partikelfilter, an dessen Auslass eine Entnahmestelle für eine Niederdruck-Abgasrückführung angeordnet ist. Zudem weist die Vorrichtung einen zusätzlichen Filter zwischen dem Partikelfilter und der Entnahmestelle auf. An der Entnahmestelle und stromab des zusätzlichen Filters ist ein Ventil angeordnet, in dessen geschlossener Position ein Teil des Abgases durch den zusätzlichen Filter und von dort in die AGR-Leitung strömt. In einem Regenerationsmodus ist das Ventil geöffnet, so dass ein Teil des Abgases durch den zusätzlichen Filter und von dort zurück in den Hauptabgaspfad strömt, nicht jedoch in die AGR-Leitung.

DE 10 2009 058 698 A1 beschreibt eine Abgasanlage mit einem Partikelfilter und einer Niederdruck-Abgasrückführungsleitung mit einem darin angeordneten Filterelement. Eine Regeneration des in der AGR-Leitung angeordneten Filterelements kann parallel im Rahmen der Regeneration des Partikelfilters erfolgen, wobei ein Teilstrom des den Partikelfilters durchströmten Abgases über das Filterelement geleitet wird, oder unabhängig von der Regeneration des Partikelfilters.

Der Erfindung liegt nun die Aufgabe zugrunde, ein Verfahren und eine Abgasanlage zur Verfügung zu stellen, welche eine erhöhte Ausfallsicherheit ermöglichen.

Diese Aufgabe wird durch ein Verfahren zur Regeneration eines mit Feststoffen verunreinigten Filterelements einer Abgasanlage gelöst, wobei die Abgasanlage einen Hauptabgaspfad mit einem Partikelfilter und einen AGR-Pfad aufweist, welcher stromab des Partikelfilters vom Hauptabgaspfad abzweigt, wobei das Filterelement im AGR-Pfad angeordnet ist und ein Abstand zwischen einem stromab gelegenen Ende einer Filterstruktur des Partikelfilters und dem Filterelement höchstens 300 mm beträgt, und das Verfahren den folgenden Schritt umfasst:
- Durchströmen des Filterelements mit einem durch den AGR-Pfad rückgeführten Abgasstrom während einer Regeneration des Partikelfilters, wobei mittels einer durch die Regeneration des Partikelfilters herbeigeführten Erwärmung des rückgeführten Abgasstroms die Regeneration des Filterelementes bewirkt wird.

An dem Filterelement (Filter) setzt sich während des Betriebs einer Verbrennungskraftmaschine, an welche die Abgasanlage angeschlossen ist, Ruß (bzw. dessen Rußpartikel), also Rußteilchen ab. Zudem filtert das Filterelement auch Fertigungsrückstände aus dem ihn durchströmenden Abgasstrom. Bei der Regeneration des Partikelfilters (welcher typischerweise ein Rußpartikelfilter, z. B. ein Dieselpartikelfilter, ist) brennen im Partikelfilter eingelagerte Rußpartikel ab. Die dabei frei werdende Wärme überträgt sich auf einen Hautabgasstrom (Hauptabgasmassenstrom). Der Hautabgasstrom ist jener Abgasstrom, welcher den Partikelfilter durchströmt. Stromab des Partikelfilters wird ein Teil des Hauptabgasstroms - der rückgeführte Abgasstrom - durch den AGR-Pfad (AGR steht für Abgasrückführung) geleitet. Somit durchströmt der erwärmte rückgeführte Abgasstrom das Filterelement, was zu einer optimalen Erwärmung des Filterelements und der darauf und/oder darin befindlichen Feststoffe führt. Dies führt zu einer Regeneration des Filterelements, also zu einem Abbrand von darauf befindlichen Rußpartikeln, welche eine Teilmenge der herausgefilterten Feststoffe darstellen können. Die durch die Regeneration des Partikelfilters herbeigeführte Erwärmung des rückgeführten Abgasstroms reicht dabei für die Regeneration des Filterelementes aus.

Die Rußpartikel resultieren aus einem Partikelschlupf durch den Partikelfilter. Das erfindungsgemäße Verfahren ist somit besonders dann von Vorteil, wenn die Verbrennungskraftmaschine ein Dieselmotor ist.

Das Durchströmen des Filterelements kann während eines Teil-Zeitraums der Regeneration des Partikelfilters erfolgen, oder auch während der gesamten Zeit der Regeneration des Partikelfilters. Somit sind der Beginn und das Ende der Regeneration des Filterelements optimal steuerbar.

Somit wird bei einer Regeneration des Partikelfilters der AGR-Pfad (z. B. eine Niederdruckabgasrückführungsstrecke) wenigstens teilweise geöffnet oder wenigstens teilweise offengelassen. Die Regeneration des Partikelfilters kann dabei während eines Motorbetriebs der Verbrennungskraftmaschine mit einer relativ hohen Abgastemperatur erfolgen oder zumindest bei einem solchen Motorbetrieb starten. Unter hohen Abgastemperaturen versteht man in diesem Zusammenhang Temperaturen, welche wenigstens 550 °C, insbesondere wenigstens 600 °C, bei einem Eintritt in den Partikelfilter betragen.

Das Durchströmen des Filterelements erfolgt bevorzugt durch einen dem Rückführen vorausgehenden Schritt des wenigstens teilweisen Öffnens oder wenigstens teilweisen Offenlassens eines im AGR-Pfad angeordneten AGR-Ventils der Abgasanlage. Ein AGR-Ventil im AGR-Pfad stellt ein einfach zu realisierendes Mittel zur Beeinflussung einer Durchströmung des AGR-Pfads dar.

Vorzugsweise ist vorgesehen, dass das Verfahren ferner folgende, dem Schritt des Durchströmens vorausgehende Schritte umfasst:
- Überprüfen ob ein momentaner Wert einer AGR-Rate, einer Temperatur unmittelbar stromauf des Filterelements und/oder eines Lambda-Wertes unmittelbar stromauf des Filterelements innerhalb eines jeweiligen, für die Regeneration des Filterelements erforderlichen (vorbestimmten) Bereichs liegt, und
- wenn der momentane Wert nicht innerhalb des jeweiligen erforderlichen Bereichs liegt, Verstellen eines AGR-Ventils des Abgassystems und/oder Anpassen eines Betriebspunkts der Verbrennungskraftmaschine, bis der momentane Wert innerhalb des erforderlichen Bereichs liegt.
Somit werden die momentane AGR-Rate, die momentane Temperatur unmittelbar stromauf des Filterelements und/oder der Lambda-Wert (und somit der Sauerstoffmassenanteil) unmittelbar stromauf des Filterelements erfasst. Anschließend wird überprüft, ob die ermittelten Werte, bzw. der ermittelte Wert, innerhalb des (jeweils) erforderlichen Bereichs liegt. Wenn dieses Kriterium nicht erfüllt ist, wird das AGR-Ventil geöffnet oder geschlossen und/oder ein Betriebspunkt der Verbrennungskraftmaschine verändert, bis das Kriterium erfüllt ist. Das Anpassen des Betriebspunkts der Verbrennungskraftmaschine erfolgt dabei bevorzugt momentenneutral. Dadurch bleibt ein von der Verbrennungskraftmaschine geliefertes oder aufgenommenes Drehmoment zumindest im Wesentlichen konstant. Somit erfolgt die Anpassung des Betriebspunkts für einen Benutzer der Verbrennungskraftmaschine unbemerkt.

Bevorzugt ist vorgesehen, dass der rückgeführte Abgasstrom unmittelbar stromauf des Filterelements eine Temperatur von mindestens 500 °C, insbesondere von mindestens 550 °C, bevorzugt von mindestens 600 °C aufweist. Ab einer Temperatur von 600 °C, welche auch als eine Mindesttemperatur zur Oxidation von Rußpartikeln bezeichnet werden kann, läuft eine Oxidation von Rußpartikeln auch ohne katalytische Beschichtung des Filterelements ausreichend schnell ab. Das Filterelement kann jedoch bevorzugt eine katalytische Beschichtung aufweisen, welche die Mindesttemperatur herabsetzt, wodurch auch bei Temperaturen kleiner als 500 °C eine ausreichend schnelle Oxidation der Rußpartikel stattfindet.

Gemäß einer bevorzugten Ausgestaltung der Erfindung ist vorgesehen, dass der rückgeführte Abgasstrom unmittelbar stromauf des Filterelements einen Lambda-Wert von wenigstens 1,05, insbesondere von wenigstens 1,1, bevorzugt von wenigstens 1,15 aufweist. Somit ist sichergestellt, dass genügend Sauerstoff für eine Oxidation der Feststoffe im rückgeführten Abgasstrom vorhanden ist.

Vorzugsweise ist vorgesehen, dass eine AGR-Rate zwischen 5 % und 40 %, insbesondere zwischen 10 % und 30 %, bevorzugt zwischen 15 % und 25 % beträgt. Eine Untergrenze einer möglichen AGR-Rate wird durch eine minimal notwendige Durchströmung des Filterelements gebildet. Je höher die AGR-Rate (bei ansonsten unveränderten Parametern) ist, umso schneller können die Feststoffe am oder im Filter erwärmt und mit Sauerstoff beaufschlagt werden. Bei einer zu hohen AGR-Rate nehmen jedoch der Lambda-Wert und die Temperatur im rückgeführten Abgasstrom ab, wodurch die AGR-Rate nach oben hin begrenzt wird.

Bevorzugt ist vorgesehen, dass das Verfahren einen Schritt des Überprüfens eines Differenzdrucks zwischen einem Druck stromauf des Filterelements und einem Druck stromab des Filterelements umfasst, wobei das Verfahren nur dann durchgeführt wird, wenn der Differenzdruck größer als eine vordefinierte Differenzdruckschwelle ist. Somit wird das erfindungsgemäße Verfahren nur dann gestartet oder fortgeführt, wenn ein Bedarf einer Regeneration des Filterelements besteht.

Ferner bevorzugt ist vorgesehen, dass eine Regeneration des Partikelfilters aktiv herbeigeführt wird, um eine Regeneration des Filterelements zu ermöglichen. Somit kann, nachdem ein Regenerationsbedarf des Filterelements festgestellt wurde, eine Regenration des Filterelements erfolgen, ohne dass eine Notwendigkeit für eine Regeneration des Partikelfilters besteht.

Bevorzugt weist das Filterelement eine maschenartige Struktur, insbesondere gebildet durch eine Vielzahl von Drähten auf. Ferner bevorzugt weist das Filterelement ein Gewebe oder ein perforiertes Blech auf. Die Netzweite oder die Größe der Perforationen beträgt vorzugsweise höchstens 0,100 mm und wenigstens 0,050 mm, ferner bevorzugt höchstens 0,085 mm und wenigstens 0,065 mm. Dadurch ist ein guter Kompromiss aus Filterwirkung und Strömungswiderstand gegeben. Die Netzweite bezeichnet analog zur Größe der Perforation die Größe der Öffnungen im Filterelement. Partikel, welche kleiner als die Netzweite oder die Größe der Perforation sind werden nicht aus dem Abgasstrom gefiltert.

Vorzugsweise ist das Filterelement im Wesentlichen zweidimensional ausgebildet, insbesondere ein Sieb, oder umfasst ein solches. Insbesondere beträgt die Ausdehnung des Filterelements rechtwinkelig zu einer Abgasströmungsrichtung (des rückgeführten Abgasstroms) wenigstens ein 5-faches, bevorzugt wenigstens ein 10-faches, insbesondere ein 20-faches seiner Ausdehnung in der Abgasströmungsrichtung.

Vorzugsweise ist das Filterelement im Wesentlichen aus einem Metall hergestellt. Mittels eines Metalls als Material für das Filterelement kann eine benötigte Struktur des Filterelements unter den zu erwartenden Abgastemperaturen realisiert werden.

Ferner wird eine Abgasanlage zur Verfügung gestellt, umfassend einen Hauptabgaspfad mit einem Partikelfilter und einen AGR-Pfad, welcher stromab des Partikelfilters vom Hauptabgaspfad abzweigt, wobei das Filterelement im AGR-Pfad angeordnet ist und ein Abstand zwischen einem stromab gelegenen Ende einer Filterstruktur des Partikelfilters und dem Filterelement höchstens 300 mm beträgt, wobei die Abgasanalage ausgebildet ist, das erfindungsgemäße Verfahren durchzuführen,. Die erfindungsgemäße Abgasanlage zeichnet sich durch ihre besondere Ausfallsicherheit aus.

Somit ist die Abgasanlage dazu ausgebildet, das Filterelement mittels des bei der Regeneration des Partikelfilters erwärmten, rückgeführten Abgasstroms derart zu erwärmen, dass eine Regeneration des Filterelements stattfindet.

Somit ist das Filterelement in einem Abstand zum Partikelfilter angeordnet, so dass der bei der Regeneration des Partikelfilters durch den AGR-Pfad rückgeführte Abgasstrom das Abbrennen der Feststoffe bewirkt. Somit ist der Abstand so gewählt, dass Wärmeverluste nach dem Partikelfilter nicht ausreichen, um die Temperatur des rückgeführten Abgasstroms unmittelbar stromauf des Filterelementes auf eine Temperatur unter einer erforderlichen Mindesttemperatur zur Oxidation von Rußpartikeln zur Oxidation der Feststoffe zu senken. Beispielsweise kann eine Temperatur des Abgasstroms beim Austritt aus dem Partikelfilter ca. 550 °C bis 630 °C betragen, wodurch verdeutlicht wird, dass ein geringer Abstand zwischen dem Partikelfilter und dem Filterelement von besonderem Vorteil ist.

Bevorzugt ist vorgesehen, dass der Abstand zwischen einem stromab gelegenen Ende einer Filterstruktur des Partikelfilters und dem Filterelement geringer als 200 mm, vorzugsweise geringer als 100 mm ist. Somit wird sichergestellt, dass ein Wärmeverlust zwischen dem Partikelfilter und dem Filterelement nicht zu hoch ist.

Gemäß einer bevorzugten Ausgestaltung der Erfindung ist vorgesehen, dass die Abgasanlage im Hauptabgaspfad stromauf des Partikelfilters eine Turbine eines Turboladers, und/oder einen Katalysator umfasst. Somit kann es sich bei der Abgasrückführung um eine Niederdruck-Abgasrückführung handeln. Der Katalysator kann eine Erwärmung des Partikelfilters bewirken und somit die Regeneration des Partikelfilters ermöglichen oder beschleunigen.

Ferner kann die Abgasanlage eine Steuereinrichtung umfassen, wobei in der Steuereinrichtung eine Software hinterlegt ist, welche dazu eingerichtet ist, das erfindungsgemäße Verfahren durchzuführen.

Ferner wird ein Kraftfahrzeug, welches die erfindungsgemäße Abgasanlage und eine Verbrennungskraftmaschine umfasst, zur Verfügung gestellt. Die Verbrennungskraftmaschine ist auslassseitig mit einem motorseitigen Ende der Abgasanlage und einlassseitig mit einem einlassseitigen Ende der Abgasanlage (des AGR-Pfads) strömungstechnisch verbunden. Das Kraftfahrzeug zeichnet sich durch eine gesteigerte Zuverlässigkeit und reduzierte Servicekosten aus.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: eine schematische Teildarstellung eines Kraftfahrzeugs,
- Figur 2: eine isometrische Teildarstellung des Kraftfahrzeugs, und
- Figur 3: eine isometrische Teildarstellung einer Abgasanlage des Kraftfahrzeugs.

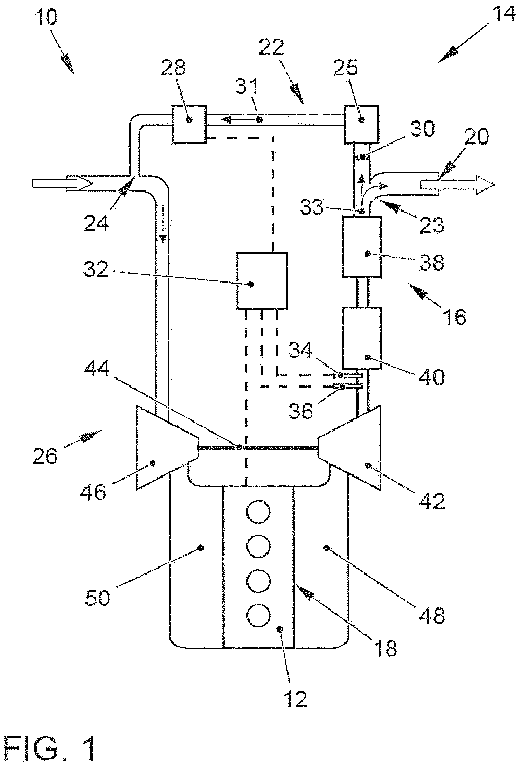

Figur 1 zeigt schematisch eine Teildarstellung eines Kraftfahrzeugs 10. Das Kraftfahrzeug 10 umfasst eine Verbrennungskraftmaschine 12, z. B. einen Dieselmotor, und eine Abgasanlage 14. Die Abgasanlage 14 weist einen Hauptabgaspfad 16 auf. Der Hauptabgaspfad 16 erstreckt sich zwischen einem motorseitigen Ende 18, welches (mittels eines Abgaskrümmers 48 der Abgasanlage 14) an die Verbrennungskraftmaschine 12 angeschlossen ist, und einem auslassseitigen Ende 20, welches zur Abgabe von Abgasen der Verbrennungskraftmaschine 12 an die Umgebung dient. Die Abgasanlage 14 weist ferner einen AGR-Pfad 22 (AGR steht für Abgasrückführung) auf, welcher sich zwischen einer Abzweigung 23 vom Hauptabgaspfad 16 und einem einlassseitigen Ende 24 erstreckt. Das einlassseitige Ende 24 ist an eine Luftversorgung 26 der Verbrennungskraftmaschine 12 angeschlossen. Die Abgasanlage 14 umfasst zudem im AGR-Pfad 22 ein AGR-Ventil 28.

Ferner umfasst die Abgasanlage 14 zwischen dem motorseitigen Ende 18 und dem AGR-Ventil 28 ein Filterelement 30. Das Filterelement 30 ist dazu ausgebildet, Feststoffe zurückzuhalten. Das Filterelement 30 dient als Schutzfilter für das AGR-Ventil 28 und die Verbrennungskraftmaschine 12, sowie für die Luftversorgung 26. Das Filterelement 30 verhindert also ein Eindringen von Partikeln, welche ansonsten eine Verschmutzung des AGR-Ventils 28 verursachen könnten. Ferner kann zwischen dem Filterelement 30 und dem AGR-Ventil 28 ein AGR-Kühler 25 angeordnet sein.

Das Filterelement 30 ist im Wesentlichen zweidimensional ausgebildet, wodurch seine Erstreckung in einer Abgasströmungsrichtung (eines rückgeführten Abgases) bezogen auf seine Erstreckung quer zur Abgasströmungsrichtung sehr klein ist. Das Filterelement 30 weist eine Vielzahl an Maschen auf und kann im Wesentlichen die Form einer Scheibe aufweisen. Beispielsweise ist das Filterelement 30 ein (engmaschig ausgeführtes) Metallsieb. Durch eine Variation der Maschengröße kann die Filtration des Abgasstroms beeinflusst werden. Beispielsweise kann eine Netzweite des Filterelements 30 ca. 75 Mikrometer betragen, was einen guten Kompromiss aus Filterwirkung und Strömungswiderstand darstellt.

Zur Steuerung des AGR-Ventils 28 und der Verbrennungskraftmaschine 12 kann die Abgasanlage 14 eine Steuereinrichtung 32 umfassen, welche z. B. auch mit einer Lambdasonde 34, z. B. einer Breitband-Lambdasonde 34 und einem NOₓ-Sensor 36 verbunden sein kann.

Im Hauptabgaspfad 16 stromauf der Abzweigung 23 sind ein Partikelfilter 38 und ein Katalysator 40 angeordnet. Zudem ist im Hauptabgaskanal 16 stromauf des Filterelements 30 eine Turbine 42 eines Turboladers angeordnet. Der Turbolader umfasst neben der Turbine 42 noch eine Welle 44, mittels welcher ein Verdichter 46 mechanisch verbunden ist. Der Verdichter 46 ist Teil der Luftversorgung 26 der Verbrennungskraftmaschine 12 und stromab des einlassseitigen Endes 24 angeordnet. Insbesondere wird der Verdichter 46 durch das Filterelement 30 vor einer Beschädigung durch Partikel geschützt. Zudem ist der Verdichter 46 über einen Ansaugkrümmer 50 mit der Verbrennungskraftmaschine 12 verbunden. Da der AGR-Pfad 22 im gezeigten Fall auf der Niederdruckseite des Turboladers angeordnet ist, spricht man von einer Niederdruck-Abgasrückführung.

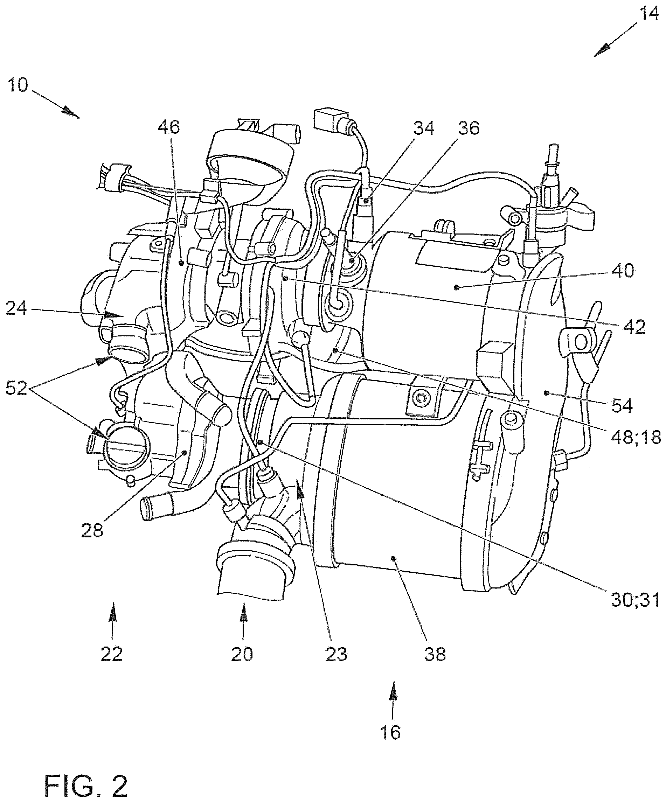

Figur 2 zeigt eine isometrische Teildarstellung des Kraftfahrzeugs 10 und im Speziellen der Abgasanlage 14. Die einzelnen Bauteile wurden bereits in Figur 1 erörtert, wobei einige in Figur 1 ersichtliche Bauteile, unter anderem die Verbrennungskraftmaschine 12 und ein Verbindungskanal zwischen zwei Anschlüssen 52 des AGR-Ventils 28 und der Luftversorgung 26 zu Gunsten der Übersichtlichkeit nicht dargestellt sind. Der Katalysator 40 und der Partikelfilter 38 sind mittels eines platzsparend ausgeformten Abgaskanals 54 miteinander verbunden. Die dargestellte Abgasanlage 14, bzw. das dargestellte Niederdruck-AGR-System, eignet sich unter anderem zum Einsatz im sogenannten "Modularen Querbaukasten".

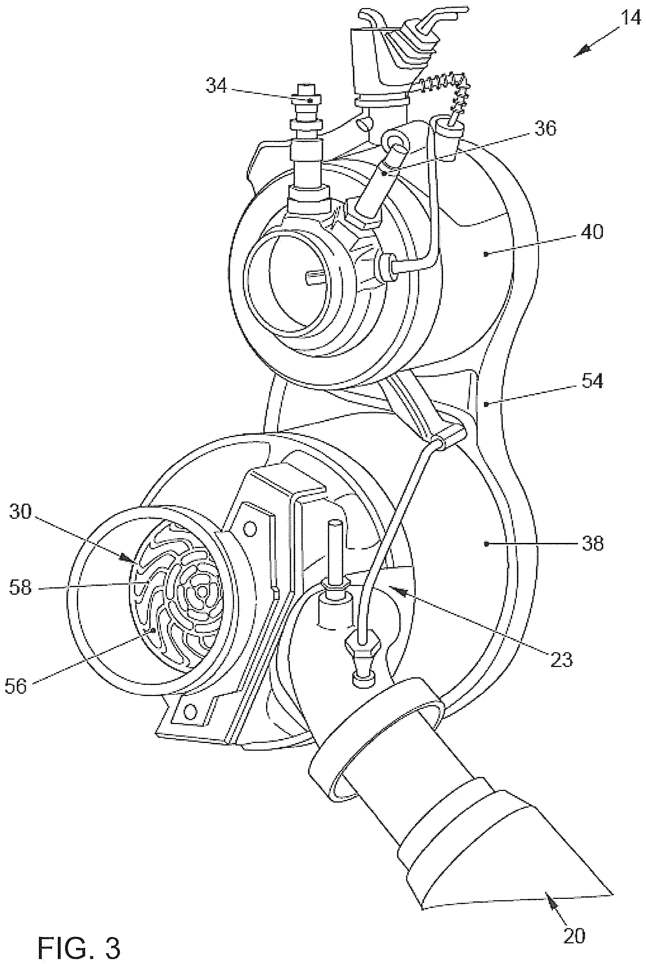

Figur 3 zeigt eine isometrische Teildarstellung der in Figur 2 ersichtlichen Abgasanlage 14, wobei die Bauteile im Hauptabgaspfad 16 stromauf des NOx-Sensors 36 und die Bauteile im AGR-Pfad 22 stromab des Filterelements 30 nicht dargestellt sind. Dadurch ist ein möglicher Aufbau des Filterelements 30 ersichtlich. Demnach kann das Filterelement 30 eine Trägerstruktur 58 mit einer Vielzahl von Stegen und ein darauf aufgebrachtes Sieb 56 umfassen. Die Trägerstruktur 58 hat den Zweck, das feinmaschig ausgebildete Sieb 56 zu stützen. Zudem kann zwischen dem Sieb 56 und der Trägerstruktur 58 ein weiteres stützendes Material angeordnet sein, welches stärker als das Sieb 56 ausgebildet ist.

Die Funktionsweise des obenstehend beschriebenen Fahrzeuges 10 mit der Abgasanlage 14 wird nachfolgend gemäß einer bevorzugten Ausgestaltung beschrieben:
Die Verbrennungskraftmaschine 12 erzeugt während ihres Betriebs Rußpartikel unterschiedlicher Größe. Der Partikelfilter 38 hat die Aufgabe, die Rußpartikel aus dem Hauptabgasstrom 33 der Verbrennungskraftmaschine 12 zu filtern. Jedoch weist der Partikelfilter 38 in der Praxis üblicherweise einen Partikelschlupf auf, wodurch ein relativ geringer Anteil der Rußpartikel den Partikelfilter 38 passiert. Um das AGR-Ventil 28 vor einer Verschmutzung durch (insbesondere größere) Rußpartikel, also Rußteilchen bzw. Ruß zu schützen, filtert das Filterelement 30 diese Rußpartikel im AGR-Pfad 22 aus dem rückgeführten Abgasstrom 31. Die Rußpartikel lagern sich somit auf dem Filterelement 30 ab, wodurch sich dessen Durchlässigkeit im Betrieb zunehmend verringert. Zudem filtert das Filterelement 30 auch Fertigungsrückstände stromauf gelegener Bauteile aus dem rückgeführten Abgasstrom 31.

Auch die Durchlässigkeit des Partikelfilters 38 verschlechtert sich mit einer zunehmenden Ruß-Beladung des Partikelfilters 38, weshalb der Partikelfilter 38 kontinuierlich oder nur bei Bedarf regeneriert wird. Dies erfolgt beispielsweise mittels einer gezielten Beeinflussung motorischer Betriebsparameter, wodurch die Abgastemperatur vor dem Eintritt in den Partikelfilter 38 angehoben wird und sich auch der Partikelfilter 38 erwärmt. Nach dem Überschreiten einer Mindesttemperatur zur Oxidation der Rußpartikel brennen die Rußpartikel im Partikelfilter 38 ab, wodurch die Ruß-Beladung des Partikelfilters 38 sinkt. Durch diesen exothermen Abbrand steigt auch die Abgastemperatur des Hautabgasstroms 33 stromab des Partikelfilters 38.

Zur Einleitung des erfindungsgemäßen Verfahrens kann das Steuergerät 32 zunächst eine Notwendigkeit der Regeneration des Filterelements 30 überprüfen. Dazu kann das Steuergerät 32 einer Erhöhung eines Differenzdrucks zwischen einem Druck stromauf und einem Druck stromab des Filterelements 30 erkennen. Die Regeneration des Filterelements 30 erfolgt beispielsweise bei einem Differenzdruck größer als eine vordefinierte Differenzdruckschwelle. Alternativ kann auch bei jeder Regeneration des Partikelfilters 38 der rückgeführte Abgasstrom 31 durch das Filterelement geleitet, und somit das Filterelement 30 regeneriert werden. Zudem kann für eine notwendige Regeneration des Filterelements 30 eine Regeneration des Partikelfilters 38 aktiv herbeigeführt werden.

Um eine optimale Regenration des Filterelements 30 sicherzustellen, können zunächst verschiedene Werte, wie z. B. eine AGR-Rate, eine Temperatur unmittelbar stromauf des Filterelements 30 und/oder ein Lambda-Wert unmittelbar stromauf des Filterelements 30, überprüft werden. Je nach Ausgestaltung können einer, mehrere oder alle diese Werte von Interesse sein. Wenn der oder die Werte nicht innerhalb eines jeweiligen, für die Regeneration des Filterelements 30 erforderlichen Bereichs liegen, wird das AGR-Ventils 28 verstellt und/oder ein Betriebspunkts der Verbrennungskraftmaschine 12 angepasst. Dies erfolgt so lange, bis der momentane Wert oder die momentanen Werte innerhalb des jeweiligen erforderlichen Bereichs liegen.

Konkret können folgende Werte genannt werden, welche sich für die Regeneration des Filterelements als praktikabel herausgestellt haben: Eine AGR-Rate von ca. 20 %, ein Lambda-Wert des rückgeführten Abgasstroms 31 unmittelbar stromauf des Filterelements 30 von ca. 1,2 und eine Temperatur des rückgeführten Abgasstroms 31 unmittelbar stromauf des Filterelements 30 von ca. 600 °C. Um die Temperatur von ca. 600 °C zu erreichen, ist es von Vorteil, wenn der Abstand zwischen einem stromab gelegenen Ende einer Filterstruktur des Partikelfilters 38 und dem Filterelement 30 beispielsweise ca. 100 mm beträgt. Dadurch werden Wärmeverluste zwischen dem Partikelfilter 38 und dem Filterelement 30 weitestgehend vermieden. Dies kann auch notwendig sein, da je nach Ausgestaltung Austrittstemperaturen aus dem Partikelfilter 38 nur geringfügig höher als 600 °C sind. Die Zeitdauer der Regeneration des Partikelfilters 38, welche ca. 15 oder 20 Minuten betragen kann, reicht aus, um eine optimale Regenration des Filterelements 30 durchzuführen.

Zusammenfassend kann festgestellt werden, dass für eine Regeneration des Filterelements 30 eine Durchströmung des Filterelements 30 mit einem durch den AGR-Pfad 22 rückgeführten Abgasstrom 31 gezielt herbeigeführt oder aufrechterhalten wird. Der rückgeführte Abgasstrom 31 ist ein Teilstrom des Hauptabgasstroms 33, welcher in der Abzweigung 23 abgezweigt wird. Durch den exothermen Abbrand der Rußpartikel im Partikelfilter 38 erwärmt sich der Hauptabgasstrom 33. Bis der Hauptabgasstrom 33 das Filterelement 30 erreicht, kühlt dieser geringfügig ab, weist jedoch immer noch eine Temperatur auf, welche höher als die Mindesttemperatur zur Oxidation der Rußpartikel ist. Diese Temperatur kann bei Bedarf durch eine katalytische Beschichtung des Filterelements 30 herabgesetzt werden.

Durch die erfindungsgemäße Durchströmung des Filterelements 30 mit dem, durch die Regeneration des Partikelfilters 38 erwärmten, rückgeführten Abgasstrom 31 findet nun eine rasche und bestmögliche Regeneration des Filterelements 30 statt. Nicht abbrennbare keramische oder metallische Partikel können auch nach der Regeneration auf dem Filterelement 30 verbleiben. Dies beeinträchtigt jedoch die Funktion der Abgasrückführung nicht.

### Bezugszeichenliste

- 10: Kraftfahrzeug
- 12: Verbrennungskraftmaschine
- 14: Abgasanlage
- 16: Hauptabgaspfad
- 18: motorseitiges Ende
- 20: auslassseitiges Ende
- 22: AGR-Pfad
- 23: Abzweigung
- 24: einlassseitiges Ende
- 25: AGR-Kühler
- 26: Luftversorgung
- 28: AGR-Ventil
- 30: Filterelement
- 31: rückgeführter Abgasstrom
- 32: Steuereinrichtung
- 33: Hauptabgasstrom
- 34: Lambdasonde
- 36: NOx-Sensor
- 38: Partikelfilter
- 40: Katalysator
- 42: Turbine
- 44: Welle
- 46: Verdichter
- 48: Abgaskrümmer
- 50: Ansaugkrümmer
- 52: Anschluss
- 54: Abgaskanal
- 56: Sieb
- 58: Trägerstruktur

## Patentansprüche

1. Verfahren zur Regeneration eines mit Feststoffen verunreinigten Filterelements (30) einer Abgasanlage (14), wobei die Abgasanlage (14) einen Hauptabgaspfad (16) mit einem Partikelfilter (38) und einen AGR-Pfad (22) aufweist, welcher stromab des Partikelfilters (38) vom Hauptabgaspfad (16) abzweigt, wobei das Filterelement (30) im AGR-Pfad (22) angeordnet ist und ein Abstand zwischen einem stromab gelegenen Ende einer Filterstruktur des Partikelfilters (38) und dem Filterelement (30) höchstens 300 mm beträgt, und das Verfahren den folgenden Schritt umfasst:
- Durchströmen des Filterelements (30) mit einem durch den AGR-Pfad (22) rückgeführten Abgasstrom (31) während einer Regeneration des Partikelfilters (38), wobei mittels einer durch die Regeneration des Partikelfilters (38) herbeigeführten Erwärmung des rückgeführten Abgasstroms (31) die Regeneration des Filterelementes (30) bewirkt wird.

2. Verfahren nach Anspruch 1, **dadurch gekennzeichnet, dass** das Verfahren ferner folgende, dem Schritt des Durchströmens vorausgehende Schritte umfasst:
- Überprüfen, ob ein momentaner Wert einer AGR-Rate, einer Temperatur unmittelbar stromauf des Filterelements (30) und/oder eines Lambda-Wertes unmittelbar stromauf des Filterelements (30) innerhalb eines jeweiligen, für die Regeneration des Filterelements erforderlichen Bereichs liegt, und
- wenn der momentane Wert nicht innerhalb des jeweiligen erforderlichen Bereichs liegt, Verstellen eines AGR-Ventils (28) der Abgasanlage (14) und/oder Anpassen eines Betriebspunkts der Verbrennungskraftmaschine, bis der momentane Wert innerhalb des erforderlichen Bereichs liegt.

3. Verfahren nach einem der vorhergehenden Ansprüche, **dadurch gekennzeichnet, dass** der rückgeführte Abgasstrom (31) unmittelbar stromauf des Filterelements (30) eine Temperatur von mindestens 500 °C, insbesondere von mindestens 550 °C, bevorzugt von mindestens 600 °C aufweist.

4. Verfahren nach einem der vorhergehenden Ansprüche, **dadurch gekennzeichnet, dass** der rückgeführte Abgasstrom (31) unmittelbar stromauf des Filterelements (30) einen Lambda-Wert von wenigstens 1,05, insbesondere von wenigstens 1,1, bevorzugt von wenigstens 1,15 aufweist.

5. Verfahren nach einem der vorhergehenden Ansprüche, **dadurch gekennzeichnet, dass** eine AGR-Rate zwischen 5 % und 40 %, insbesondere zwischen 10 % und 30 %, bevorzugt zwischen 15 % und 25 % beträgt.

6. Verfahren nach einem der vorhergehenden Ansprüche, **dadurch gekennzeichnet, dass** das Verfahren einen Schritt des Überprüfens eines Differenzdrucks zwischen einem Druck stromauf des Filterelements (30) und einem Druck stromab des Filterelements (30) umfasst, wobei das Verfahren nur dann durchgeführt wird, wenn der Differenzdruck größer als eine vordefinierte Differenzdruckschwelle ist.

7. Abgasanlage (14), umfassend einen Hauptabgaspfad (16) mit einem Partikelfilter (38) und einen AGR-Pfad (22), welcher stromab des Partikelfilters (38) vom Hauptabgaspfad (16) abzweigt, wobei ein Filterelement (30) im AGR-Pfad (22) angeordnet ist, **dadurch gekennzeichnet, dass** ein Abstand zwischen einem stromab gelegenen Ende einer Filterstruktur des Partikelfilters (38) und dem Filterelement (30) höchstens 300 mm beträgt und die Abgasanlage (14) zur Durchführung des Verfahrens nach einem der Ansprüche 1 bis 6 ausgebildet ist.

8. Abgasanlage nach Anspruch 7, **dadurch gekennzeichnet, dass** der Abstand zwischen dem stromab gelegenen Ende der Filterstruktur des Partikelfilters (38) und dem Filterelement (30) höchstens 200 mm, vorzugsweise höchstens 100 mm beträgt.

9. Abgasanlage nach einem der Ansprüche 7 oder 8, **dadurch gekennzeichnet, dass** die Abgasanlage (14) im Hauptabgaspfad (23) stromauf des Partikelfilters (38) eine Turbine (42) eines Turboladers und/oder einen Katalysator (40) umfasst.

## Claims

1. Method for regenerating a filter element (30), which has been contaminated with solids, of an exhaust-gas system (14), wherein the exhaust-gas system (14) has a main exhaust-gas path (16) with a particle filter (38) and has an EGR path (22) which branches off from the main exhaust-gas path (16) downstream of the particle filter (38), wherein the filter element (30) is arranged in the EGR path (22) and a spacing between a downstream end of a filter structure of the particle filter (38) and the filter element (30) amounts to at most 300 mm, and the method comprises the following step:
- throughflow of the filter element (30) with an exhaust-gas stream (31), which is recirculated through the EGR path (22), during a regeneration of the particle filter (38), wherein the regeneration of the filter element (30) is effected by heating of the recirculated exhaust-gas stream (31) that is caused as a result of the regeneration of the particle filter (38).

2. Method according to Claim 1, **characterized in that** the method furthermore comprises the following steps performed prior to the throughflow step:
- checking whether a present value of an EGR rate, of a temperature directly upstream of the filter element (30) and/or of a lambda value directly upstream of the filter element (30) lies within a respective range required for the regeneration of the filter element, and
- if the present value does not lie within the respective required range, adjusting an EGR valve (28) of the exhaust-gas system (14) and/or adapting an operating point of the internal combustion engine until the present value lies within the required range.

3. Method according to either of the preceding claims, **characterized in that** the recirculated exhaust-gas stream (31) has a temperature of at least 500°C, in particular of at least 550°C, preferably of at least 600°C, directly upstream of the filter element (30).

4. Method according to any of the preceding claims, **characterized in that** the recirculated exhaust-gas stream (31) has a lambda value of at least 1.05, in particular of at least 1.1, preferably of at least 1.15, directly upstream of the filter element (30).

5. Method according to any of the preceding claims, **characterized in that** an EGR rate amounts to between 5% and 40%, in particular between 10% and 30%, preferably between 15% and 25%.

6. Method according to any of the preceding claims, **characterized in that** the method comprises a step of checking a pressure difference between a pressure upstream of the filter element (30) and a pressure downstream of the filter element (30), wherein the method is performed only if the pressure difference is greater than a predefined pressure difference threshold.

7. Exhaust-gas system (14), comprising a main exhaust-gas path (16) with a particle filter (38) and comprising an EGR path (22) which branches off from the main exhaust-gas path (16) downstream of the particle filter (38), wherein a filter element (30) is arranged in the EGR path (22), **characterized in that** a spacing between a downstream end of a filter structure of the particle filter (38) and the filter element (30) amounts to at most 300 mm, and the exhaust-gas system (14) is designed for carrying out the method according to any of Claims 1 to 6.

8. Exhaust-gas system according to Claim 7, **characterized in that** the spacing between the downstream end of the filter structure of the particle filter (38) and the filter element (30) amounts to at most 200 mm, preferably at most 100 mm.

9. Exhaust-gas system according to either of Claims 7 and 8, **characterized in that** the exhaust-gas system (14) comprises a turbine (42) of a turbocharger, and/or a catalytic converter (40), in the main exhaust-gas path (23) upstream of the particle filter (38).

## Revendications

1. Procédé de régénération d'un élément filtrant (30) d'un système d'échappement (14) bouché avec des substances solides, dans lequel le système d'échappement (14) présente un chemin principal des gaz d'échappement (16) avec un filtre à particules (38) et un chemin AGR (22), qui est dérivé du chemin principal des gaz d'échappement (16) en aval du filtre à particules (38), dans lequel l'élément filtrant (30) est disposé dans le chemin AGR (22) et une distance entre une extrémité aval d'une structure de filtre du filtre à particules (38) et l'élément filtrant (30) vaut au maximum 300 mm et le procédé comprend l'étape suivante:
- traverser l'élément filtrant (30) avec un courant de gaz d'échappement (31) recyclé par le chemin AGR (22) pendant une régénération du filtre à particules (38), dans lequel on provoque la régénération de l'élément filtrant (30) au moyen d'un chauffage du courant de gaz d'échappement recyclé (31) causé par la régénération du filtre à particules (38).

2. Procédé selon la revendication 1, **caractérisé en ce que** le procédé comprend en outre les étapes suivantes, qui précèdent l'étape de traversée:
- vérifier si une valeur instantanée d'un taux AGR, d'une température immédiatement en amont de l'élément filtrant (30) et/ou d'une valeur lambda immédiatement en amont de l'élément filtrant (30) se situe à l'intérieur d'une plage respective nécessaire pour la régénération de l'élément filtrant, et
- lorsque la valeur instantanée ne se situe pas à l'intérieur de la plage nécessaire respective, déplacer une soupape AGR (28) du système d'échappement (14) et/ou adapter un point de fonctionnement du moteur à combustion interne, jusqu'à ce que la valeur instantanée soit située à l'intérieur de la plage nécessaire.

3. Procédé selon l'une quelconque des revendications précédentes, **caractérisé en ce que** le courant de gaz d'échappement recyclé (31) présente immédiatement en amont de l'élément filtrant (30) une température d'au moins 500°C, en particulier d'au moins 550°C, et de préférence encore d'au moins 600°C.

4. Procédé selon l'une quelconque des revendications précédentes, **caractérisé en ce que** le courant de gaz d'échappement recyclé (31) présente immédiatement en amont de l'élément filtrant (30) une valeur lambda d'au moins 1,05, en particulier d'au moins 1,1, de préférence d'au moins 1,15.

5. Procédé selon l'une quelconque des revendications précédentes, **caractérisé en ce qu'**un taux AGR vaut entre 5 % et 40 %, en particulier entre 10 % et 30 %, de préférence entre 15 % et 25 %.

6. Procédé selon l'une quelconque des revendications précédentes, **caractérisé en ce que** le procédé comprend une étape de vérification d'une différence de pression entre une pression en amont de l'élément filtrant (30) et une pression en aval de l'élément filtrant (30), dans lequel on n'exécute le procédé que lorsque la différence de pression est supérieure à un seuil de différence de pression prédéterminé.

7. Système d'échappement (14), comprenant un chemin principal des gaz d'échappement (16) avec un filtre à particules (38) et un chemin AGR (22), qui est dérivé du chemin principal des gaz d'échappement (16) en aval du filtre à particules (38), dans lequel un élément filtrant (30) est disposé dans le chemin AGR (22), **caractérisé en ce qu'**une distance entre une extrémité aval d'une structure de filtre du filtre à particules (38) et l'élément filtrant (30) vaut au maximum 300 mm et le système d'échappement (14) est configuré pour l'exécution du procédé selon l'une quelconque des revendications 1 à 6.

8. Système d'échappement selon la revendication 7, **caractérisé en ce que** la distance entre l'extrémité aval de la structure de filtre du filtre à particules (38) et l'élément filtrant (30) vaut au maximum 200 mm, de préférence au maximum 100 mm.

9. Système d'échappement selon une des revendications 7 ou 8, **caractérisé en ce que** le système d'échappement (14) comprend dans le chemin principal des gaz d'échappement (23) en amont du filtre à particules (38) une turbine (42) d'un turbocompresseur et/ou un catalyseur (40).
